(19) Europäisches Patentamt
European Patent Office
Office européen des brevets

(11) **EP 3 705 544 B1**

(12) **EUROPEAN PATENT SPECIFICATION**

(45) Date of publication and mention
of the grant of the patent:
**20.08.2025 Bulletin 2025/34**

(21) Application number: **18872985.9**

(22) Date of filing: **31.10.2018**

(51) International Patent Classification (IPC):
*C09D 183/02* (2006.01)    *C09D 183/04* (2006.01)
*C09D 7/61* (2018.01)    *C09D 5/10* (2006.01)
*C08K 3/10* (2018.01)    *C08K 3/22* (2006.01)
*C09D 7/40* (2018.01)    *C08G 77/02* (2006.01)

(52) Cooperative Patent Classification (CPC):
(C-Sets available)
**C09D 5/106; C08G 77/02; C08K 3/10; C08K 3/22;
C09D 7/61; C09D 7/70; C09D 183/02;
C09D 183/04; B05D 2202/10; B05D 2701/40;
C08G 77/18** (Cont.)

(86) International application number:
**PCT/JP2018/040464**

(87) International publication number:
**WO 2019/088155 (09.05.2019 Gazette 2019/19)**

(54) **ANTI-RUST COATING COMPOSITION AND USE THEREOF**

ROSTSCHUTZBESCHICHTUNGSZUSAMMENSETZUNG UND IHRE VERWENDUNG

COMPOSITION DE REVÊTEMENT ANTIROUILLE ET UTILISATION DE CELLE-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.10.2017 JP 2017210724
26.03.2018 JP 2018058401**

(43) Date of publication of application:
**09.09.2020 Bulletin 2020/37**

(73) Proprietor: **Chugoku Marine Paints, Ltd.
Hiroshima 739-0652 (JP)**

(72) Inventors:
• **FUKUDA Takehiro
Otake-shi
Hiroshima 739-0652 (JP)**
• **KONDOU Katsumi
Otake-shi
Hiroshima 739-0652 (JP)**
• **INAGAKI Taichi
Otake-shi
Hiroshima 739-0652 (JP)**
• **DOI Masakazu
Otake-shi
Hiroshima 739-0652 (JP)**

(74) Representative: **Hoffmann Eitle
Patent- und Rechtsanwälte PartmbB
Arabellastraße 30
81925 München (DE)**

(56) References cited:
**EP-A1- 2 617 786      EP-A1- 2 876 144
EP-A1- 3 199 605      WO-A1-2014/014063
WO-A1-2014/119784      JP-A- 2010 269 497
JP-A- S56 129 270**

(52) Cooperative Patent Classification (CPC): (Cont.)

C-Sets
**C08K 3/10, C08L 83/02;**
**C08K 3/22, C08L 83/02;**
**C09D 183/04, C08K 3/22, C08K 3/10**

# EP 3 705 544 B1

## Description

Technical Field

The present invention relates to an anti-rust coating composition for use in, for example, a steel processing process, and use of the anti-rust coating composition. More particularly, the present invention relates to an anti-rust coating composition that can form a coating film having an average dry film thickness of 10 μm or less by use of a conventional coating applicator, and can also form an anti-rust coating film having excellent anticorrosive properties and weldability; and a substrate with an anti-rust coating film formed from the anti-rust coating composition.

Background Art

Anti-rust coatings have been heretofore applied to substrate surfaces for preventing rusting during construction of large steel structures such as ships, marine structures, plants, bridges and overland tanks. As such anti-rust coatings, organic anti-rust coatings such as wash primers, non-zinc epoxy primers, epoxy zinc-rich primers, and inorganic zinc anti-rust coatings containing a siloxane binder and zinc powder are known. Among these anti-rust coatings, inorganic zinc anti-rust coatings excellent in weldability are most widely used.

Among the anti-rust coatings, primary anti-rust coatings that are used in pretreatment for steel processing processes of ships, marine structures, plants, bridges, and overland tanks are mostly applied to have an average dry film thickness of 15 μm. When the thickness can be made smaller, the welding speed in the welding process after coating application can be enhanced, so that productivity is improved. However, when the thickness is smaller, anticorrosive properties are insufficient, and therefore formation of an anti-rust coating film having an average dry film thickness of 15 μm or less has substantially been impractical.

Further, in recent years, methods for forming a thin primary anti-rust coating film having an average dry film thickness of 10 μm or less have been studied. Methods for applying a conventional primary anti-rust coating to form the thin primary anti-rust coating film include the following three methods.

The first method is a method in which the discharge flow rate of the primary anti-rust coating during coating application is decreased. However, with a conventional applicator, a uniform coating film cannot be formed because it is necessary to set a discharge flow rate below a limit at which the coating can be no longer stably applied.

The second method is development of an applicator itself. At present, it is difficult to form a thin film by applying an existing primary anti-rust coating with an existing applicator. Even if an applicator suitable for formation of a thin film is developed, there is a problem in that introduction of the new applicator requires enormous costs.

The third method is a method in which the primary anti-rust coating is diluted with a large amount of an organic solvent to reduce the content of nonvolatile contents of the coating. Under the current circumstances, this method is a realistic method that enables coating application to form a thin film; however, there is a problem in that the amount of volatile organic compounds (VOCs) generated per application area increases, as a result, leading to an increase in environmental load.

Therefore, although it is important to apply the primary anti-rust coating to form a thin film from the view point of productivity, it is very difficult to form a thin film with a conventional applicator while the environmental load is not increased.

On the other hand, Patent Literature 1 discloses a primary anti-rust coating composition containing a siloxane binder and zinc powder such as scaly zinc powder. According to Patent Literature 1, the primary anti-rust coating composition can form a coating film having an average dry film thickness of 10 μm or less and has excellent anti-rust properties.

Patent Literature 2 discloses an inorganic zinc shop primer containing zinc powder with an average particle size in a specific range, and an extender pigment. According to Patent Literature 2, the inorganic zinc shop primer can form a coating film excellent in weldability and anticorrosive properties even as a thin film having an average dry film thickness of about 5 to 15 μm.

Citation List

Patent Literature

Patent Literature 1
International Publication No. WO 2014/014063
Patent Literature 2
International Publication No. WO 2014/119784

Summary of Invention

Technical Problem

However, when a steel material covered with an anti-rust coating film formed of a composition as described in Patent Literatures 1 and 2 is welded, weld defects such as a large number of pits (through-holes) and blow holes (internal bubbles), gas grooves and wormholes may be generated in weld beads depending on welding conditions.

For forming a coating film having an average dry film thickness of 10 $\mu$m or less by use of a conventional applicator, the composition described in Patent Literature 2 needs to be diluted with an organic solvent in an amount of more than 30 parts by mass based on 100 parts by mass of the composition. That is, with consideration given to an environmental load caused by the diluting solvent, it is found that the composition has an insufficient coating application property for application of the composition with a conventional applicator.

Further, for application to the above-described large steel structures, it is important that the coating composition has a long pot life so that it is possible to meet requirements in operation processes (for example, steel material supply time, interruption caused by problems, and change of operation schedule).

The present invention seeks to solve the above-described problems, and an object of the present invention is to provide an anti-rust coating composition that has a long pot life and that can form an anti-rust coating film having an average dry film thickness of 10 $\mu$m or less by use of a conventional applicator without dilution with a large amount of an organic solvent and that can form an anti-rust coating film having excellent anticorrosive properties even as such a thin film and having excellent weldability to a steel material; and use of the anti-rust coating composition.

Technical Solution

As a result of diligent research to solve the problems described above, the present inventors found that the problems can be solved by an anti-rust coating composition having a specific constitution, leading to completion of the present invention.

The present invention provides an anti-rust coating composition, an anti-rust coating film, a primary anti-rust coating film, a substrate with an anti-rust coating film and a method for producing a substrate with an anti-rust coating film as defined in the appended claims.

Advantageous Effects of Invention

The anti-rust coating composition of the present invention has a long pot life, and can form an anti-rust coating film having an average dry film thickness of 10 $\mu$m or less by use of a conventional applicator without dilution with a large amount of an organic solvent and can form an anti-rust coating film having excellent anticorrosive properties even as such a thin film and having excellent weldability to a steel material.

Brief Description of Drawing

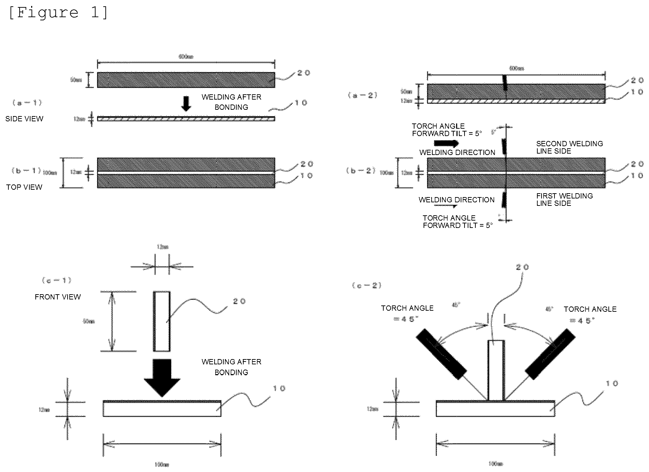

[Figure 1] Figure 1 is a diagram showing an outline of a welding test.

Description of Embodiment

Hereinafter, an anti-rust coating composition of the present invention (hereinafter, also referred to as "the present composition"), an anti-rust coating film, a substrate with an anti-rust coating film, and a method for production thereof will be described in detail together with preferred aspects.

<<Anti-rust Coating Composition>>

The present composition comprises an alkyl silicate condensate (A) having a specific weight average molecular weight, zinc powder (B), and one or more pigments (C) selected from the group consisting of an extender pigment, an anti-rust pigment and a color pigment, the pigment (C) being neither the zinc powder (B) nor a conductive pigment (D), wherein the conductive pigment (D) is selected from the group consisting of zinc oxide, carbon powder and metal powder other than the zinc powder (B) and molybdenum, a mass ratio of the zinc powder (B) to the pigment (C) ((B)/(C)) is 2.0 to 5.0, and the pigment volume concentration (PVC) is 60 to 70%.

The present composition comprises the components (A) to (C), the mass ratio of the component (B) to the component (C) is in a specific range, and the pigment volume concentration (PVC) is in a specific range. Thus, the present composition can form an anti-rust coating film having an average dry film thickness of 10 $\mu$m or less by use of a conventional applicator without dilution with a large amount of an organic solvent, and can form an anti-rust coating film having excellent anticorrosive properties even as such a thin film and having excellent weldability to a steel material.

If desired, the present composition may comprise a conductive pigment (D), and other components such as a binder other than the alkyl silicate condensate (A), a pigment other than the components (B), (C) and (D), additives, and an organic solvent as long as the effects of the present invention are not impaired. The present composition is typically a two-component composition including a base component containing the alkyl silicate condensate (A), and a paste component containing the zinc powder (B) and the pigment (C). If necessary, the present composition may be a multi-component composition including three or more components.

The base component and paste component are typically stored, preserved and transported in different containers, and mixed immediately before being used. During storage, some coating compositions suffer a phenomenon called skinning in which an insoluble film is formed on a surface layer, and the present composition may suffer a phenomenon similar to the skinning (hereinafter, referred to simply as "skinning") between a liquid phase and a pigment phase separated with elapse of time after the base component is mixed with the paste component. A coating composition that has suffered skinning is difficult to re-disperse, so that it is substantially impossible to use the coating composition. Thus, a coating composition that easily suffers skinning cannot be expected to have a long pot life. The present composition is a coating composition that hardly suffers skinning, can meet requirements in operation processes, and has a pot life of at least 24 hours at 23°C.

<Alkyl Silicate Condensate (A)>

The alkyl silicate condensate (A) is not particularly limited as long as it has a weight average molecular weight (Mw) of 1,500 to 8,000, and the Mw is preferably 1,500 to 7,000. The Mw is a value in terms of a polystyrene, which is measured by a gel permeation chromatography (GPC), and the details thereof are as described in Examples.

When the Mw is in the above-described range, it is possible to perform curing at ordinary temperature (for example, curing at 5 to 35°C) in a short time at the time of drying the coating, the coating film has improved anticorrosive properties and adhesion strength to the substrate, and generation of blow holes (internal bubbles) during welding is prevented. On the other hand, when the Mw is below the lower limit, the curing reaction of the alkyl silicate condensate (A) is slowed, so that curing by heating at a high temperature (for example, 200 to 400°C) is required at the time of drying the coating film in the case where curing needs to be performed in a short time. When the Mw is above the upper limit, the pot life tends to be reduced.

Examples of the alkyl silicate to be used for the alkyl silicate condensate (A) include compounds such as tetramethyl orthosilicate, tetraethyl orthosilicate, tetra-n-propyl orthosilicate, tetra-i-propyl orthosilicate, tetra-n-butyl orthosilicate, tetra-sec-butyl orthosilicate, methyl polysilicate and ethyl polysilicate.

The alkyl silicate condensate (A) can be produced by a known conventional method. The alkyl silicate condensate (A) can be prepared by, for example, adding, for example, hydrochloric acid to a mixed solution of an alkyl silicate and an organic solvent, and stirring the resulting mixture to produce a partially hydrolyzed condensate.

Such alkyl silicate condensates (A) may be used singly, or used in combination of two or more thereof.

The content of the alkyl silicate condensate (A) in terms of a nonvolatile content is typically 10 to 30 mass%, preferably 15 to 25 mass%, more preferably 16 to 23 mass%, based on 100 mass% of the nonvolatile contents of the present composition. When the content of the alkyl silicate condensate (A) is in the above-described range, even a coating film having an average dry film thickness of 10 $\mu$m or less can be made continuous and homogeneous, and as a result, rusting of the steel material can be prevented.

The nonvolatile content means thermal residues of the present composition under the following conditions. The thermal residues of the coating composition can be measured in accordance with the specification of JIS K 5601 1-2 (heating temperature: 125°C, heating time: 60 minutes).

<Zinc powder (B)>

The zinc powder (B) is not particularly limited as long as it is powder of metal zinc or powder of an alloy mainly containing zinc. Examples of the alloy include alloys of zinc and at least one selected from aluminum, magnesium and tin, and preferred examples thereof include zinc-aluminum alloys and zinc-tin alloys. Preferably, the present composition contains one or more selected from the group consisting of scaly zinc powder (B1) and spherical zinc powder (B2) as such zinc powder (B). Such zinc powder (B) may be used singly, or used in combination of two or more thereof.

The mass ratio of the zinc powder (B) to the later-described pigment (C) ((B)/(C)) in the present composition is 2.0 to 5.0, preferably 2.0 to 4.5. It is preferable that the mass ratio ((B)/(C)) be in the above-described range from the viewpoint of anticorrosive properties and weldability. When the mass ratio ((B)/(C)) is above the upper limit of the above-described range, the ratio of the zinc powder (B) in the coating film formed increases, and therefore the amount of zinc fumes generated during welding increases, so that there may be an adverse effect on the health of welders, and weldability tends to be deteriorated. On the other hand, when the mass ratio ((B)/(C)) is below the lower limit of the above-described range, anticorrosive properties tends to be insufficient because the ratio of the pigment (C) in the coating film formed increases, and thus contact between particles of zinc powder (B) is loosened, so that a sacrificial protection effect is hardly obtained.

It is preferable that the present composition contain both scaly zinc powder (B1) and spherical zinc powder (B2) or only the spherical zinc powder (B2) as the zinc powder (B). When the present composition contains both the scaly zinc powder (B1) and the spherical zinc powder (B2), the zinc powder (B) contains preferably 1 to 60 mass% of the scaly zinc powder (B1) and 40 to 99 mass% of the spherical zinc powder (B2), more preferably 3 to 40 mass% of the scaly zinc powder (B1) and 60 to 97 mass% of the spherical zinc powder (B2), based on 100 mass% of the zinc powder (B). Use of the scaly zinc powder (B1) and the spherical zinc powder (B2) in the amounts described above is preferable because while the amount of the expensive scaly zinc powder (B1) is reduced, effects of adding the scaly zinc powder (B1) as described later is not impaired, and thus a coating film having good anticorrosive properties can be formed. On the other hand, when the zinc powder (B) contains only the spherical zinc powder (B2), excellent economic efficiency is attained because the spherical zinc powder (B2) is less expensive than the scaly zinc powder (B1), and a coating film having necessary and sufficient anticorrosive properties can be formed.

When an anti-rust coating film formed from the present composition is heated at a high temperature of 800°C or higher during welding, the scaly zinc powder (B1) is easily oxidized because of its large specific surface area, so that anticorrosive properties after heating may be deteriorated. On the other hand, even when the anti-rust coating film is heated at a high temperature as described above, use of both the scaly zinc powder (B1) and the spherical zinc powder (B2) tends to enable maintenance of anticorrosive properties after heating because metal zinc is apt to remain inside the spherical zinc powder (B2).

The scaly zinc powder (B1) has a metallic gross color, and in formation of a coating film, the principal surfaces of the zinc powder particles are easily oriented parallel to the coating film surface, so that the zinc powder tends to easily take on a metallic gross color even when other color pigments are introduced. Therefore, use of the scaly zinc powder (B1) may limit color hue design. On the other hand, when both the scaly zinc powder (B1) and the spherical zinc powder (B2) are used, the content of the scaly zinc powder (B1) can be made relatively small, and therefore the above-mentioned tendency is relaxed, so that the color hue design can be made freely.

Scaly Zinc Powder (B1)

The scaly zinc powder (B1) is not particularly limited as long as it is metal zinc or an alloy mainly containing zinc and has a scaly particle shape.

The scaly zinc powder (B1) is preferably one having a median diameter (D50) of 30 $\mu$m or less and an average particle thickness of 1 $\mu$m or less, more preferably one having a D50 of 5 to 20 $\mu$m and an average particle thickness of 0.2 to 0.9 $\mu$m. The aspect ratio represented by a ratio of D50 to the average thickness (D50/average particle thickness) is preferably 10 to 150, more preferably 20 to 100.

When the D50 of the scaly zinc powder (B1) is in the above-described range, occurrence of clogging with the coating composition in the applicator can be prevented.

The D50 can be measured with a laser diffraction scattering particle size distribution measuring apparatus, for example "SALD 2200" (manufactured by Shimadzu Corporation). The average particle thickness can be calculated by observing the scaly zinc powder (B1) in a horizontal direction with respect to the principal surface by use of a scanning electron microscope (SEM), for example "XL-30" (manufactured by Royal Philips) to measure the thicknesses of several tens to several hundreds of particles, and determining an average thereof.

The D50 is an average of values obtained by measuring D50 three times with the measuring apparatus "SALD 2200". The D50 is a value obtained by adding a small amount of a neutral detergent to zinc powder to be measured, ultrasonically dispersing the zinc powder in water for 5 minutes to perform pretreatment, adding the dispersion of the pretreated zinc powder in a circulated water, which is ionexchanged water with a small amount of a neutral detergent, and performing measurement with the dispersion time set to 1 minute at the time of measurement.

The average thickness is a value determined in the following manner: zinc powder to be measured is attached on a cellophane tape, the surface of the powder is observed with the scanning electron microscope (SEM) "XL-30", 30 zinc powders in which the principal surface of the particle is horizontal with respect to the observation direction are randomly extracted, the particle thicknesses for the zinc powders are measured, and an average of the thicknesses is calculated.

The scaly zinc powder (B1) having such a shape has a specific surface area larger than that of the spherical zinc powder (B2), so that contact between zinc powders in the anti-rust coating film tends to be easily tightened. Therefore, a composition containing scaly zinc powder (B1) can form a coating film excellent in anticorrosive properties after long-term exposure even when the content of the zinc powder (B) in the anti-rust coating film formed is relatively small. The specific surface area can be measured with a flow automatic specific area measuring apparatus, for example "FlowSorb II 2300" (manufactured by Shimadzu Corporation).

Examples of commercial products of the scaly zinc powder (B1) include STANDART Zinc flake GTT (D50: 17 $\mu$m,

average thickness: 0.7 $\mu$m, aspect ratio: 24), STANDART Zinc flake G and STANDART Zinc flake AT (each manufactured by ECKART GmbH) as scaly metal zinc powder, and STAPA 4ZNAL7 (alloy of zinc and aluminum; manufactured by ECKART GmbH) and STAPA 4 ZNSN30 (alloy of zinc and tin; manufactured by ECKART GmbH) as scaly zinc alloy powder.

The scaly zinc powders (B1) may be used singly, or used in combination of two or more thereof.

Spherical Zinc Powder (B2)

The spherical zinc powder (B2) is not particularly limited as long as it is metal zinc or an alloy mainly containing zinc and has a spherical particle shape.

The spherical zinc powder (B2) has a substantially spherical particle shape. Typically, the ratio of the longer diameter to the shorter diameter (longer diameter/shorter diameter) (hereinafter, referred to as a longer diameter-shorter diameter ratio) is preferably 1 to 3, although there is no specified range. The longer diameter-shorter diameter ratio can be calculated by observing the spherical zinc powder (B2) with a scanning electron microscope (SEM) as in the case of scaly zinc powder (B1), measuring the longer diameter (the length of the longest of line segments connecting arbitrary two points on the particle surface) and the shorter diameter (the length of the longest of line segments that orthogonally cross the line segment giving the longer diameter, and connect arbitrary two points on the particle surface), and determining averages of the longer diameters and the shorter diameters of the particles.

The D50 of the spherical zinc powder (B2) is preferably 2 to 15 $\mu$m, more preferably 2 to 7 $\mu$m. The D50 can be measured with a laser diffraction scattering particle size distribution measuring apparatus, for example "SALD 2200" (manufactured by Shimadzu Corporation).

Examples of commercial products of the spherical zinc powder (B2) include F-2000 (manufactured by The Honjo Chemical Corporation, D50: 5 $\mu$m, longer diameter-shorter diameter ratio: 1.1).

The spherical zinc powders (B2) may be used singly, or used in combination of two or more thereof.

<Pigment (C)>

The pigment (C) is one or more pigments selected from the group consisting of an extender pigment, an anti-rust pigment and a color pigment.

The extender pigment is not particularly limited as long as it is an inorganic pigment that is used for general coatings, and an inorganic pigment having a heat resistance is preferable. Examples thereof include potassium feldspar, soda feldspar, kaolin, mica, silica, talc, barium sulfate, aluminum oxide, zirconium silicate, wollastonite and diatomaceous earth. The extender pigment may be an inorganic pigment that generates pyrolysis gases, such as calcium fluoride, calcium carbonate, magnesium carbonate or strontium carbonate. Among these extender pigments, potassium feldspar and mica are preferable.

Examples of commercial products of the extender pigment include UNISPAR PG-K10 (manufactured by Sibelco Malaysia Sdn. Bhd) as potassium feldspar, Mica Powder 100 Mesh (manufactured by Fukuoka Talc Co., Ltd.), Kaolin ASP-200 (BASF Japan Ltd.), A-PAX45M (manufactured by Kinsei Matec Co., Ltd.) as zirconium silicate, FC-1 Talc (manufactured by Fukuoka Talc Co., Ltd.), Silica QZ-SW (manufactured by GOTO-KOUZAN Co., Ltd.), Precipitated Barium Sulfate 100 (manufactured by Sakai Chemical Industry Co., Ltd.), and Radiolite (manufactured by Showa Chemical Industry Co., Ltd.) as diatomaceous earth.

The inorganic pigment that generates the pyrolysis gases generates gases (for example, $CO_2$ and $F_2$) through pyrolytic decomposition (for example, pyrolytic decomposition at 500 to 1500°C). Bubbles are generated by gases derived from the alkyl silicate condensate (A) and components other than the condensate (A) as described later in a melt pool during welding. In welding of a steel material covered with a coating film containing such a pigment that generates pyrolysis gases, the inorganic pigment has an action to remove these bubbles from the melt pool together with the gases derived from the inorganic pigment. Examples of commercial products of the pigment that generates pyrolysis gases include Fluorite 400 Mesh (manufactured by Kinsei Matec Co., Ltd.), NS#400 (manufactured by Nitto Funka Kogyo K.K.), Magnesium Carbonate (manufactured by Tomita Pharmaceutical Co., Ltd.) and Strontium Carbonate A (manufactured by The Honjo Chemical Corporation).

When such an inorganic pigment that generates pyrolysis gases is used, the content of the pigment is preferably 0.1 to 8 mass%, more preferably 0.2 to 4 mass%, based on 100 mass% of nonvolatile contents of the present composition.

The anti-rust pigment is an anti-rust pigment other than the zinc powder (B) and the later-described conductive pigment (D), and is used for further improving the anticorrosive properties of the coating film. Examples of the anti-rust pigment include zinc phosphate compounds, calcium phosphate compounds, aluminum phosphate compounds, magnesium phosphate compounds, zinc phosphite compounds, calcium phosphite compounds, aluminum phosphite compounds, strontium phosphite compounds, aluminum metaphosphate compounds, aluminum tripolyphosphate compounds, zinc cyanamide compounds, borate compounds, zinc chloride, zinc sulfide, zinc sulfate and nitro compounds.

Among these compounds, aluminum metaphosphate compounds and aluminum tripolyphosphate compounds are preferable from the viewpoint of, for example, enabling improvement of the anticorrosive properties and weldability of an anti-rust coating film formed.

Examples of commercial products of the anti-rust pigment include LF Bowsei CP-Z (manufactured by KIKUCHI COLOR & CHEMICALS CORPORATION) as a zinc calcium phosphate compound, Protex YM-70 (manufactured by Taihei Chemical Industrial Co., Ltd.) as a zinc phosphite (calcium) compound, Protex YM-92NS (manufactured by Taihei Chemical Industrial Co., Ltd.) as a zinc phosphite (strontium) compound, K-WHITE #94 (manufactured by TAYCA CORPORATION) as an aluminum metaphosphate compound, K-WHITE #84 and K-WHITE #105 (manufactured by TAYCA CORPORATION) as aluminum tripolyphosphate compounds, LF Bowsei ZK-32 (manufactured by KIKUCHI COLOR & CHEMICALS CORPORATION) as a zinc cyanamide compound, Sachtolich HD (manufactured by Sachleben Chemie GmbH) as zinc sulfide, and zinc chloride (manufactured by Nagai Chemical Industrial Co., Ltd.).

The color pigments include inorganic color pigments and organic color pigments. The inorganic color pigment is not particularly limited as long as it is an inorganic color pigment other than the later-described conductive pigment (D), and examples thereof include titanium oxide, red iron oxide, and composite oxides of copper, chromium and manganese. Examples of the organic color pigment include organic color pigments such as phthalocyanine green and phthalocyanine blue. Examples of commercial products of the organic color pigment include TITONE R-5N (manufactured by Sakai Chemical Industry Co., Ltd.), Red Iron Oxide No. 404 (manufactured by Morishita Bengara Kogyo Co., Ltd.), DAIPYROXIDE BLACK #9510 (manufactured by Dainichiseika Color & Chemicals Mfg. Co., Ltd.), Heliogen Green L8690 (manufactured by BASF Japan Ltd.) and FASTOGEN Blue 5485 (manufactured by DIC Corporation).

The color pigments may be used singly, or used in combination of two or more thereof.

When the organic color pigment is used, the content thereof is preferably 0.15 to 2.0 mass% based on 100 mass% of nonvolatile contents of the present composition. Thus, when the organic color pigment is used, it is necessary to use the organic color pigment in combination with one or more selected from the group consisting of the extender pigment, the anti-rust pigment and the inorganic color pigment as other pigments (C) for ensuring that the mass ratio ((B)/(C)) is 2.0 to 5.0 and the PVC is 60 to 70%.

<Conductive Pigment (D)>

It is preferable that the present composition contain the conductive pigment (D) from the viewpoint of, for example, enabling improvement of the anticorrosive properties of an anti-rust coating film formed. In particular, when the present composition contains only the spherical zinc powder (B2) as the zinc powder (B), it is preferable to use the pigment (D) in combination from the viewpoint of enhancing the sacrificial protection effect of the anti-rust coating film.

Specifically, it is important that electrons generated in ionization of the zinc powder (B) are efficiently supplied to a substrate such as a steel material for ensuring that an anti-rust coating film formed from the present composition exhibits excellent anticorrosive properties. Typically, a current-carrying effect can be obtained by contact between the zinc powders (B) in an anti-rust coating film, and particularly in an anti-rust coating film containing the scaly zinc powder (B1), contact between zinc powders tends to easily occur. On the other hand, when an anti-rust coating film containing only the spherical zinc powder (B2) as the zinc powder (B) further contains the conductive pigment (D), the conductive pigment (D) serves to connect zinc powders, so that an effective sacrificial protection effect can be obtained, resulting in exhibition of good anticorrosive properties.

Examples of the conductive pigment (D) include metal powder other than the zinc powder (B) and molybdenum as described later, zinc oxide and carbon powder. Among them, zinc oxide, which is inexpensive and has high conductivity, is preferable.

Examples of commercial products of the zinc oxide include Zinc Oxide of JIS 1 Grade (manufactured by Sakai Chemical Industry Co., Ltd.) and Zinc Oxide of JIS 3 Grade (manufactured by HAKUSUI TECH CO., LTD.).

Examples of the metal powder include Fe-Si powder, Fe-Mn powder, Fe-Cr powder, magnetic iron powder and iron phosphide. Examples of commercial products of the metal powder include Ferrosilicon (manufactured by Kinsei Matec Co., Ltd.), Ferromanganese (manufactured by Kinsei Matec Co., Ltd.), Ferrochromium (manufactured by Kinsei Matec Co., Ltd.) and Ferrophos 2132 (manufactured by Occidental Chemical Corporation).

Examples of the carbon powder include carbon black. Examples of commercial products of the carbon powder include Mitsubishi Carbon Black MA-100 (manufactured by Mitsubishi Chemical Corporation).

The conductive pigments (D) may be used singly, or used in combination of two or more thereof.

When the conductive pigment (D) is used, the content of the conductive pigment (D) is preferably 0.5 to 10 parts by mass, more preferably 1 to 5 parts by mass, based on 100 parts by mass of the zinc powder (B). It is preferable that the content of the conductive pigment (D) be in the above-described range because the sacrificial protection effect of the coating film is enhanced to improve anticorrosive properties.

The content of the conductive pigment (D) is preferably more than 0 mass% and 10 mass% or less, more preferably 5 mass% or less, based on 100 mass% of nonvolatile contents of the present composition. It is preferable that the content of the conductive pigment (D) be in the above-described range because anticorrosive properties can be maintained while the content of the zinc powder (B) is kept small.

<Other Components>

The present composition may optionally contain other components such as additives such as binders other than the alkyl silicate condensate (A), pigments other than the zinc powder (B), the pigment (C) and the conductive pigment (D), anti-settling agents, drying agents, fluidity adjusting agents, defoaming agents, dispersants, anti-flooding agents, anti-skinning agents, plasticizers and ultraviolet absorbers, and organic solvents as long as the purpose and the effects of the present invention are not impaired.

These components may be used singly, or used in combination of two or more thereof.

<Binder Other Than the Alkyl Silicate (A)>

The present composition may contain, for example, a polyvinyl butyral resin as the binder other than the alkyl silicate condensate (A). Examples of commercial products of the polyvinyl butyral resin include S-LEC B BM-2 (manufactured by Sekisui Chemical Co., Ltd).

When the present composition is a two-component composition, it is preferable that such a binder other than the alkyl silicate condensate (A) be present in the base component.

<Pigment Other Than the Zinc Powder (B), Pigment (C) and Conductive Pigment (D)>

The present composition may contain pigments other than the zinc powder (B), the pigment (C) and the conductive pigment (D). Examples of the pigments include alkali glass powder, molybdenum and molybdenum compounds.

(Alkali Glass Powder)

The alkali glass powder has actions such as activation of zinc by alkali metal ions present in the glass powder, and stabilization of an arc at the time of welding a steel plate. Examples of the alkali glass powder include powder obtained by grinding a common glass plate or glass bottle to about 5 $\mu$m to prepare glass powder, and washing the glass powder with an acid to adjust the pH of the glass powder to 8 or less. Examples of commercial products of the alkali glass powder include "APS-325" (manufactured by PUREMIC K.K.).

(Molybdenum and Molybdenum Compound)

The molybdenum (metal molybdenum) and the molybdenum compound each act as an inhibitor against oxidation of zinc (so called a white rust inhibitor), which reduces generation of white rust (mixture of, for example, zinc oxide, zinc hydroxide and zinc carbonate) on an anti-rust coating film formed. The present composition may contain one or both of the molybdenum and the molybdenum compound.

When a steel material coated with the present composition is exposed outdoors, zinc or a zinc alloy in a coating film may react with water, oxygen or carbon dioxide gas to generate white rust on the coating film surface. When a topcoat coating film formed from a topcoat coating is formed on the coating film surface having white rust, adhesion between the coating films may be deteriorated. With respect to such a problem, removal operation is required in which white rust on the anti-rust coating film surface is removed by appropriate means before application of the topcoat coating, but depending on requirements in operation processes and specific uses, such removal operation may be utterly unacceptable.

Examples of the molybdenum compound include molybdenum oxides such as molybdenum trioxide, molybdenum sulfide, molybdenum halides, molybdic acid, ammonium molybdate, phosphomolybdic acid, silicomolybdic acid, alkali metal salts of molybdic acid, alkali metal salts of phosphomolybdic acid, alkali metal salts of silicomolybdic acid, alkaline earth metal salts of molybdic acid, alkaline earth metal salts of phosphomolybdic acid, alkaline earth metal salts of silicomolybdic acid, manganese salts of molybdic acid, manganese salts of phosphomolybdic acid, manganese salts of silicomolybdic acid, basic nitrogen-containing compound salts of molybdic acid, basic nitrogen-containing compound salts of phosphomolybdic acid, and basic nitrogen-containing compound salts of silicomolybdic acid.

When one or both of the molybdenum and the molybdenum compound is used, the total content of the molybdenum and the molybdenum compound is preferably 0.05 to 5.0 parts by mass, more preferably 0.3 to 3.0 parts by mass, still more preferably 0.5 to 2.0 parts by mass, based on 100 parts by mass of the zinc powder (B). When the content is in the above-described range, a sufficient inhibitory action on oxidation of zinc is obtained, and reduction of activity of the zinc powder (B) can be prevented to maintain the anticorrosive properties of the coating film.

<Additives>

The present composition may contain additives such as anti-settling agents, drying agents, fluidity adjusting agents, defoaming agents, dispersants, anti-flooding agents, anti-skinning agents, plasticizers and ultraviolet absorbers.

Examples of the anti-settling agents include anti-settling agents of organic bentonite type, polyethylene oxide type, fumed silica type, and amide type. Examples of commercial products of the anti-settling agent include TIXOGEL MPZ (manufactured by BYK Additives GmbH), DISPARLON 4200-20 (manufactured by Kusumoto Chemicals, Ltd.), DISPARLON A630-20X (manufactured by Kusumoto Chemicals, Ltd.) and AEROSIL 200 (manufactured by NIPPON AEROSIL CO., LTD.).

When the present composition contains an anti-settling agent, the content thereof is typically 0.5 to 5.0 mass%, preferably 0.5 to 3.0 mass% based on 100 mass% of nonvolatile contents of the paste component when the present composition is the two-component composition. It is preferable that the content of the anti-settling agent be in the above-described range from the viewpoint of workability at the time of mixing the paste component and the base component because of little pigment sedimentation.

<Organic Solvent>

It is preferable that the present composition contain an organic solvent because the dispersibility of the zinc powder (B) is improved, and it is possible to obtain a coating film that exhibits good conformability with a steel material in the coating application process, and is excellent in adhesion to the steel material.

Examples of the organic solvent include organic solvents that are commonly used in the field of coatings, such as alcohol solvents, ester solvents, ketone solvents, aromatic solvents and glycol solvents.

Examples of the alcohol solvents include methanol, ethanol, propanol and butanol. Examples of the ester solvents include ethyl acetate, butyl acetate and propylene glycol monomethyl ether acetate. Examples of the ketone solvents include methyl isobutyl ketone and cyclohexanone. Examples of the aromatic solvents include benzene, xylene and toluene. Examples of the glycol solvents include propylene glycol monomethyl ether.

When the present composition contains an organic solvent, the content thereof is typically 25 to 50 mass%, preferably 35 to 45 mass%, more preferably 38 to 42 mass%. The coating composition of the present invention is preferably an organic solvent composition.

The viscosity of the present composition, which is measured at a temperature of 23°C by use of Iwata Viscosity Cup (model: NK-2, manufactured by ANEST IWATA Corporation), is preferably 9 to 13 seconds, more preferably 9 to 11 seconds, from the viewpoint of, for example, easily forming a coating film having an average dry film thickness of 10 μm or less by use of a conventional applicator. The present composition may optionally contain the organic solvent for adjusting the viscosity of the present composition within the above-described range.

<Pigment Volume Concentration (PVC)>

The present composition has a pigment volume concentration (PVC) of 60 to 70%, preferably 61 to 67%, more preferably 61 to 66%. In the present invention, the pigment volume concentration (PVC) refers to a concentration, which is a proportion (by volume), expressed as a percentage, of pigment components in the nonvolatile contents of the present composition and solid particles in additives that are insoluble at 23°C in an organic solvent obtained by mixing ethanol and toluene at a ratio of 1:1 based on the nonvolatile contents of the present composition. The pigment volume concentration (PVC) is determined from the following equation.

[Math. 1]

$$PVC = \frac{\text{total volume of pigment components + total volume of solid particles in additives}}{\text{total volume of nonvolatile contents of coating composition}} \times 100\,[\%]$$

Examples of the "pigment components" include the zinc powder (B) such as the scaly zinc powder (B1) and the spherical zinc powder (B2), the pigment (C), the conductive pigment (D) and pigments other than the zinc powder (B), the pigment (C) and the conductive pigment (D). Examples of the "additives" include anti-settling agents, drying agents, fluidity adjusting agents, defoaming agents, dispersants, anti-flooding agents, anti-skinning agents, plasticizers and ultraviolet absorbers.

In calculation of PVC, the volume of each component is calculated from the mass and the density of each component. Further, the volume of the alkyl silicate condensate (A) is calculated from the mass and the density of the alkyl silicate condensate (A) in terms of $SiO_2$.

The total volume of nonvolatile contents in the present composition can be calculated from the mass and the true density of the nonvolatile contents of the present composition. The mass and the true density of the nonvolatile contents of the present composition may be measured values, or values calculated beforehand from raw materials to be used as described above.

The sum of the total volume of the pigment components and the total volume of solid particles in the additives can be calculated from the mass and the true density of the pigments and solid particles in the additives that have been used. The mass and the true density of the pigments and solid particles in the additives may be measured values, or values calculated from raw materials to be used. For example, the sum of the total volume of the pigment components and the total volume of the solid particles in the additives can be calculated by separating the nonvolatile contents of the present composition into pigments and solid particles in additives and other components with the aid of the organic solvent obtained by mixing ethanol and toluene at a ratio of 1:1, and measuring the mass and the true density of the separated pigments and solid particles.

By adjusting PVC of the present composition within the above-described range, the pigments in a coating film can be densified, and a coating film having an average dry film thickness of 10 $\mu$m or less can be formed by use of a conventional applicator. On the other hand, when PVC of the present composition is above the upper limit of the range, the ratio of the alkyl silicate condensate (A) and binders other than the condensate (A) in a coating film formed decreases, so that voids are easily generated between pigments, and therefore it is difficult to form a thin film having an average dry film thickness of 10 $\mu$m or less by use of a conventional applicator. When PVC of the present composition is below the lower limit of the range, the ratio of the alkyl silicate condensate (A) and binders other than the condensate (A) in a coating film formed increases, so that it is difficult to obtain a current-carrying effect between the zinc powders (B), and therefore the coating film tends to have insufficient anticorrosive properties. Further, weldability tends to be insufficient because the amount of organic components derived from the condensate (A) in the coating film increases.

Further, by adjusting the mass ratio of the zinc powder (B) to the pigment (C) ((B)/(C)) to 2.0 to 5.0, a coating composition that can form a coating film excellent in anticorrosive properties and weldability can be obtained.

By adjusting PVC and the mass ratio ((B)/(C)) within the above-described range, the following benefits (1) to (3) can be obtained.

(1) The environmental load tends to be reduced because the anti-rust coating film becomes thinner, and thus the amount of the coating used per application area can be reduced, so that the amount of VOC generated per application area is 40 g/m$^2$ or less. Further, the content of the zinc powder (B) per application area is 30 g/m$^2$ or less, which is advantageous from the viewpoint of resource protection. (2) Even a thin primary anti-rust coating film having an average dry film thickness of 10 $\mu$m or less is excellent in anticorrosive properties after long-term exposure of the coating film. (3) A thin anti-rust coating film can be formed, and therefore the welding speed in the steel material welding process can be increased, so that productivity can be improved.

<Use of Anti-rust Coating Composition>

The anti-rust coating composition of the present invention is preferably a primary anti-rust coating composition.

In general, primary anti-rust coating films that are applied to steel materials for large structures such as ships, marine structures, plants, bridges and overland tanks are required to meet the following requirements: cutting, welding and the like in a process of constructing a large structure are not hindered; rusting of a steel material during construction is suppressed; and excellent adhesion with a topcoat coating film applied onto the anti-rust coating film is exhibited. Thus, an anti-rust coating film formed of the present composition excellent in such performance can be suitably used for the above-described purposes.

<Anti-rust Coating Film and Substrate with a Anti-rust Coating Film>

The anti-rust coating film of the present invention (hereinafter, also referred to as "the present anti-rust coating film") is formed from the anti-rust coating composition, and the substrate with an anti-rust coating film according to the present invention includes a substrate such as a steel material, and an anti-rust coating film formed on a surface of the substrate and formed from the anti-rust coating composition.

Examples of the materials for the substrate include steel materials such as iron, steel, alloy iron, carbon steel, mild steel and alloy steel. Further, the substrate is preferably one subjected to blast treatment under conditions corresponding to at least derusting grade Sa 2 1/2 in ISO 8501-1, as necessary.

The average dry film thickness of the present anti-rust coating film, which is measured with an electromagnetic film thickness gauge, is typically 30 $\mu$m or less, preferably 5 to 20 $\mu$m. When the present anti-rust coating film is a primary anti-rust coating film, the average dry film thickness is preferably 10 $\mu$m or less, more preferably 5 to 9 $\mu$m.

It is desirable that in the primary anti-rust coating film, the content of the zinc powder (B) per unit area be 5 to 30

g/m$^2$, preferably 5 to 20 g/m$^2$ because generation of gas originating from the zinc powder (B) in the welding process can be suppressed. The content of the zinc powder (B) per unit area may be determined by calculating the content of the zinc powder (B) per unit area in the coating film from the content of the zinc powder (B) in the coating composition and the average dry film thickness obtained by measurement, or analyzing the content of the zinc powder (B) present in the coating film with a unit area.

<Method for Producing Substrate with an Anti-rust Coating Film>

The present anti-rust coating film is formed from the present composition, and specifically, the present anti-rust coating film can be produced by passing through a process including the steps of:

[1] applying the present anti-rust coating composition to a substrate; and
[2] forming a coating film on the substrate by drying the anti-rust coating composition applied onto the substrate.

<Step [1]>

The method for applying the present composition onto a substrate is not particularly limited, and the present composition can be applied by a conventional and known method such as air spray application, airless spray application, brush application or roller application. In general, when the present composition is applied in, for example, shipyards or ironworks, where typically a line applicator is used. Coating application conditions such as the line speed of the line applicator, the application pressure of an air spray, or an airless spray installed in the applicator, and the size (diameter) of a spray tip can be appropriately changed according to the thickness of an anti-rust coating film to be formed. For example, the line applicator may be set up so that the line speed is 4.5 m/min, the tip size (GRACO) is 617 to 929 (coating application), and the secondary (coating) pressure is about 3.8 to 8.9 MPa.

<Step [2]>

The present composition can be dried and cured at ordinary temperature, and may be heated and hot-air-dried depending on the line speed of the line applicator. When the present composition is heated and hot-air-dried, the drying temperature is typically 5 to 40°C, preferably 10 to 30°C, and the drying time is typically 3 to 15 minutes, preferably 5 to 10 minutes. In the present composition, the alkyl silicate condensate (A) whose Mw is in the above-described range is used, and thus the coating film can be cured in a short time even at such ordinary temperature. Therefore, the coating composition of the present invention is suitable for use in pretreatment of steel plates that is performed in steel plate processing processes in ships, marine structures, plants, bridges, and overland tanks.

Examples

Hereinafter, the present invention will be described in further detail by way of Examples, but the present invention is in no way limited by these Examples. In Examples described below, the term "parts" refers to "parts by mass" unless otherwise specified.

<Method for Preparing Alkyl Silicate Condensate (A)>

[Preparation Example 1]

41.8 parts of Ethyl Silicate 40 (manufactured by Colcoat Co., Ltd.), 9.5 parts of industrial ethanol, 5 parts of deionized water and 0.1 parts of 35 mass% hydrochloric acid were put in a vessel, and stirred at 65°C for 5 hours, and 43.6 parts of isopropyl alcohol was then added to prepare an alkyl silicate condensate solution A-1.

[Preparation Examples 2 to 5]

In Preparation Examples 2 to 5, alkyl silicate condensate solutions A-2 to A-5 shown in Table 1 below were prepared in the same manner as in Preparation Example 1 except that the stirring time was changed to those shown in Table 1, respectively.

[Preparation Example 6]

31.5 parts of Ethyl Silicate 40 (manufactured by Colcoat Co., Ltd.), 10.4 parts of industrial ethanol, 5 parts of deionized water and 0.1 parts of 35 mass% hydrochloric acid were put in a vessel, and stirred at 50°C for 3 hours, and 53 parts of isopropyl alcohol was then added to prepare an alkyl silicate condensate solution A-6.

The thus obtained alkyl silicate condensate solutions A-1 to A-6 were used as base components. Accordingly, for example, the alkyl silicate condensate solution A-1 is also referred to as a base component A-1 hereinafter.

The weight average molecular weight (Mw) of the alkyl silicate condensate present in each of the obtained alkyl silicate condensate solutions A-1 to A-6 was measured by a gel permeation chromatography (GPC) method under measurement conditions shown below. A small amount of each of these condensate solutions was weighed, and diluted by addition of tetrahydrofuran, and the resulting solution was filtered with a membrane filter to give a GPC measurement sample. Table 1 shows the results.

- Apparatus: "Alliance 2695" (manufactured by Waters Corporation)
- Column: one "TSKgel Super H4000" column connected to two "TSKgel Super H2000" columns (both columns are manufactured by Tosoh Corporation, 6 mm in inner diameter $\times$ 15 cm in length)
- Eluent: 99% tetrahydrofuran (stabilized with BHT)
- Flow rate: 0.6 ml/min
- Detector: "RI-104" (manufactured by Shodex)
- Column thermostatic chamber temperature: 40°C
- Standard substance: polystyrene

[Table 1]

|  | Preparation Example 1 | Preparation Example 2 | Preparation Example 3 | Preparation Example 4 | Preparation Example 5 | Preparation Example 6 |
|---|---|---|---|---|---|---|
| Alkyl silicate condensate solution | A-1 | A-2 | A-3 | A-4 | A-5 | A-6 |
| Stirring time | 5 hours | 1 hour | 24 hours | 0 minute | 40 hours | 3 hours |
| Weight average molecular weight (Mw) of alkyl silicate condensate | 3000 | 1700 | 8000 | 1200 | 12000 | 1500 |

<Method for Preparing Paste Component>

[Preparation Example 7]

0.7 parts of TIXOGEL MPZ (manufactured by BYK Additives GmbH) as the anti-settling agent, 3.7 parts of xylene, 3.4 parts of butyl acetate and 5.2 parts of isobutyl alcohol as the organic solvents, 7.1 parts of an extender pigment: UNISPAR PG-K10 (manufactured by Sibelco Malaysia Sdn. Bhd) as the pigment (C), and 0.6 parts of Zinc Oxide of JIS 3 Grade (manufactured by HAKUSUI TECH CO., LTD.) as the conductive pigment (D) were put in a polyethylene vessel, glass beads were added thereto, and the resulting mixture was shaken with a paint shaker for 3 hours. Subsequently, 25.5 parts of spherical zinc powder: F-2000 (manufactured by The Honjo Chemical Corporation) as the zinc powder (B) was added, and the resulting mixture was shaken for 5 minutes to disperse the pigment components. Thereafter, the glass beads were removed with an 80-mesh net to prepare a paste component B-1.

[Preparation Examples 8 to 28]

In Preparation Examples 8 to 28, paste components B-2 to B-22 were prepared in the same manner as in Preparation Example 7 except that the raw materials shown in Table 2 below each were used in amounts shown in Table 2. The values in Table 2 each represent the number of parts by mass.

[Table 2]

| | | Preparation Example 7 | Preparation Example 8 | Preparation Example 9 | Preparation Example 10 | Preparation Example 11 | Preparation Example 12 | Preparation Example 13 | Preparation Example 14 | Preparation Example 15 | Preparation Example 16 | Preparation Example 17 | Preparation Example 18 | Preparation Example 19 | Preparation Example 20 | Preparation Example 21 | Preparation Example 22 | Preparation Example 23 | Preparation Example 24 | Preparation Example 25 | Preparation Example 26 | Preparation Example 27 | Preparation Example 28 |
|---|---|---|---|---|---|---|---|---|---|---|---|---|---|---|---|---|---|---|---|---|---|---|---|
| | | B-1 | B-2 | B-3 | B-4 | B-5 | B-6 | B-7 | B-8 | B-9 | B-10 | B-11 | B-12 | B-13 | B-14 | B-15 | B-16 | B-17 | B-18 | B-19 | B-20 | B-21 | B-22 |
| B | Scaly zinc powder | | 5.4 | 27.1 | | | | | | | | | | | | | | | | | 4.2 | | |
| | Spherical zinc powder | 25.5 | 21.7 | | 27.1 | 27.1 | 27.1 | 27.4 | 29.8 | 23.3 | 29.5 | 27.1 | 28.4 | 27.4 | 23.1 | 39.5 | 40.4 | 31.2 | 21.0 | 30.3 | 17.0 | 27.1 | 27.1 |
| C | Potassium feldspar | 7.1 | 7.5 | 7.5 | 7.5 | | | 7.7 | 8.1 | 9.9 | 6.2 | | 5.1 | 7.1 | 6.4 | | | 8.8 | 11.4 | 5.6 | | | |
| | Kaolin | | | | | 7.5 | | | | | | | | | | | | | | | | | |
| | Mica | | | | | | 7.5 | | | | | | | | | | | | | | | | |
| | Anti-rust pigment 1 | | | | | | | | | | | 7.5 | | | | | | | | | | | |
| | Anti-rust pigment 2 | | | | | | | | | | | | | | | | | | | | | 7.5 | |
| | Anti-rust pigment 3 | | | | | | | | | | | | | | | | | | | | | | 7.5 |
| | Red iron oxide | | | | | | | | | | | | | 2.8 | | | | | | | | | |
| | Phthalocyanine green | | | | | | | | | | | | | | 0.5 | | | | | | | | |
| D | Conductive pigment | 0.6 | 0.7 | 0.7 | 0.7 | 0.7 | 0.7 | | 0.7 | 0.6 | 0.7 | 0.7 | 0.7 | 0.7 | | 0.6 | 0.8 | | 0.8 | 0.6 | 0.7 | 4.2 | 0.7 |
| Additive | Anti-settling agent | 0.7 | 0.7 | 0.7 | 0.7 | 0.7 | 0.7 | 0.7 | 0.8 | 0.7 | 0.8 | 0.7 | 0.6 | 0.6 | 0.6 | 0.9 | 0.9 | 0.9 | 0.7 | 0.8 | 1.4 | 0.7 | 0.7 |
| Organic solvent | Xylene | 3.7 | 4.0 | 4.0 | 4.0 | 4.0 | 4.0 | 4.0 | 4.3 | 3.8 | 4.1 | 4.0 | 4.2 | 4.0 | 3.3 | 4.7 | 4.7 | 4.7 | 3.7 | 4.2 | 6.6 | 4.0 | 4.0 |
| | Isobutyl alcohol | 5.2 | 5.6 | 5.6 | 5.6 | 5.6 | 5.6 | 5.6 | 6.0 | 5.3 | 5.8 | 5.6 | 5.9 | 5.6 | 4.6 | 6.4 | 6.4 | 6.5 | 5.1 | 5.9 | 4.4 | 5.6 | 5.6 |
| | Butyl acetate | 3.4 | 3.7 | 3.7 | 3.7 | 3.7 | 3.7 | 3.7 | 4.1 | 3.6 | 3.9 | 3.7 | 3.9 | 3.8 | 3.1 | 4.4 | 4.4 | 4.4 | 3.5 | 3.9 | 3.3 | 3.7 | 3.7 |
| | Total | 46.2 | 49.3 | 49.3 | 49.3 | 49.3 | 49.3 | 49.1 | 52.8 | 47.2 | 51.0 | 49.3 | 51.6 | 49.7 | 41.7 | 56.7 | 56.8 | 57.3 | 46.0 | 51.4 | 41.1 | 49.3 | 49.3 |

<Method for Preparing Anti-rust Coating Composition>

[Example 1]

Immediately before coating application, the base component A-1 formed of the alkyl silicate condensate solution A-1 and the paste component B-1 were mixed together on the basis of the amounts (values) shown in Table 3, thereby preparing a coating composition of Example 1. Table 3 shows the pigment volume concentration (PVC) of the obtained anti-rust coating composition, the amounts of the alkyl silicate condensate (A) and the zinc powder (B) in nonvolatile contents of the coating composition, and the mass ratio of the zinc powder (B) to the pigment (C) ((B)/(C)).

[Table 3]

| | | | | Examples | | | | | | | | | | | | | | | | | Comparative Examples | | | | | | | | |
|---|---|---|---|---|---|---|---|---|---|---|---|---|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 13 | 14 | 15 | 16 | 17 | 1 | 2 | 3 | 4 | 5 | 6 | 7 | 8 | 9 |
| Coating composition | Base component | No. | | A-1 | A-1 | A-1 | A-1 | A-2 | A-3 | A-1 | A-1 | A-1 | A-1 | A-1 | A-1 | A-1 | A-1 | A-1 | A-1 | A-1 | A-1 | A-4 | A-5 | A-1 | A-1 | A-1 | A-1 | A-1 | A-6 |
| | | Mixing amount (parts by mass) | | 53.8 | 50.7 | 50.7 | 50.7 | 50.7 | 50.7 | 50.7 | 50.7 | 50.9 | 47.2 | 52.8 | 49.0 | 50.7 | 48.4 | 50.3 | 50.7 | 50.7 | 58.3 | 50.7 | 50.7 | 43.3 | 43.2 | 42.7 | 54.0 | 48.6 | 58.9 |
| | Paste component | No. | | B-1 | B-2 | B-3 | B-4 | B-4 | B-4 | B-5 | B-6 | B-7 | B-8 | B-9 | B-10 | B-11 | B-12 | B-13 | B-21 | B-22 | B-14 | B-4 | B-4 | B-15 | B-16 | B-17 | B-18 | B-19 | B-20 |
| | | Mixing amount (parts by mass) | | 46.2 | 49.3 | 49.3 | 49.3 | 49.3 | 49.3 | 49.3 | 49.3 | 49.1 | 52.8 | 47.2 | 51.0 | 49.3 | 51.6 | 49.7 | 49.3 | 49.3 | 41.7 | 49.3 | 49.3 | 56.7 | 56.8 | 57.3 | 46.0 | 51.4 | 41.1 |
| Properties | | Pigment volume concentration (PVC) (%) | | 62 | 65 | 65 | 65 | 65 | 65 | 65 | 65 | 65 | 68 | 65 | 66 | 64 | 65 | 65 | 64 | 64 | 58 | 65 | 65 | 65 | 65 | 72 | 65 | 65 | 57 |
| | | Amount of alkyl silicate condensate (A) in nonvolatile contents of coating composition (mass%) | | 21 | 19 | 19 | 19 | 19 | 19 | 19 | 19 | 19 | 17 | 20 | 18 | 19 | 18 | 19 | 19 | 19 | 24 | 19 | 19 | 15 | 15 | 15 | 21 | 18 | 22 |
| | | Amount of zinc powder (B) in nonvolatile contents of coating composition (mass%) | | 59 | 61 | 61 | 61 | 61 | 61 | 61 | 61 | 62 | 62 | 54 | 65 | 61 | 62 | 61 | 61 | 61 | 57 | 61 | 61 | 82 | 83 | 64 | 49 | 67 | 58 |
| | | Zinc powder (B)/pigment (C) (mass ratio) | | 3.6 | 3.6 | 3.6 | 3.6 | 3.6 | 3.6 | 3.6 | 3.6 | 3.6 | 3.6 | 2.4 | 4.8 | 3.6 | 3.6 | 3.6 | 3.6 | 3.6 | 3.6 | 3.6 | 3.6 | - | - | 3.6 | 1.8 | 5.4 | - |

[Examples 2 to 17 and Comparative Examples 1 to 9]

As in Example 1, immediately before coating application, the base components and the paste components shown in Tables 1 and 2 were mixed together on the basis of the amounts (values) shown in Table 3, thereby preparing coating compositions of Examples 2 to 17 and Comparative Examples 1 to 9. Table 3 shows the pigment volume concentration (PVC) of each of the obtained anti-rust coating compositions, the amounts of the alkyl silicate condensate (A) and the zinc powder (B) in nonvolatile contents of the coating composition, and the mass ratio of the zinc powder (B) to the pigment (C) ((B)/(C)) in the coating composition.

Details of the components given in Table 2 are as shown in Table 4.

## EP 3 705 544 B1

[Table 4]

|  |  | Product name | Supplier | Nonvolatile contents (%) |
|---|---|---|---|---|
| B | Scaly zinc powder | STANDART Zinc flake GTT | ECKART GmbH | 100 |
| B | Spherical zinc powder | F-2000 | The Honjo Chemical Corporation | 100 |
| C | Potassium feldspar | UNISPAR PG-K10 | Sibelco Malaysia Sdn. Bhd | 100 |
| C | Kaolin | Kaolin ASP-200 | BASF Japan Ltd. | 100 |
| C | Mica | Mica Powder 100 Mesh | Fukuoka Talc Co., Ltd. | 100 |
| C | Anti-rust pigment 1 | LF Bowsei CP-Z | KIKUCHI COLOR & CHEMICALS CORPORATION | 100 |
| C | Anti-rust pigment 2 | K-WHITE #105 | TAYCA CORPORATION | 100 |
| C | Anti-rust pigment 3 | K-WHITE #94 | TAYCA CORPORATION | 100 |
| C | Red iron oxide | Red Iron Oxide No. 404 | Morishita Bengara Kogyo Co., Ltd. | 100 |
| C | Phthalocyanine green | Heliogen Green L8690 | BASF Japan Ltd. | 100 |
| D | Conductive pigment | Zinc Oxide of JIS 3 Grade | HAKUSUI TECH CO., LTD. | 100 |
| Additive | Anti-settling agent | TIXOGEL MPZ | ECKART GmbH | 100 |

[Coating Application Conditions]

A line applicator (apparatus name: Conveyor Applicator for SP, manufactured by Takeuchi Kosakusho K.K.) identical in configuration to a conventional line applicator was used. Coating application conditions were adjusted so that the distance between a discharge outlet of an air spray gun and an application steel plate was 25 cm, the line speed was 13 m/min, and the application pressure was 0.2 MPa. The coating composition of each of Examples and Comparative Examples, which had not been diluted, was applied by air spraying.

(1) Thin Film Coating Application Property

Each coating composition was applied to a cold-rolled steel plate (JIS G 3141, $500 \times 30 \times 0.8$ mm) under the above-described coating application conditions. Subsequently, the applied composition was dried in a thermostatic chamber at a temperature of 23°C and a relative humidity of 50% for 1 week as specified in JIS K5600-1-6, and on the basis of the average dry film thickness of each anti-rust coating film obtained, the thin film coating application property was graded on the following three levels. Table 6 below shows the results of evaluating the thin film coating application property of each coating composition. The average dry film thickness is an average of measured values obtained by performing measurement at 20 measurement points with an electromagnetic film thickness gauge "LE-370" (manufactured by Kett Electric Laboratory).

A: The average dry film thickness of the anti-rust coating film formed is 9 $\mu$m or less.
B: The average dry film thickness of the anti-rust coating film formed is more than 9 $\mu$m and 10 $\mu$m or less.
C: The average dry film thickness of the anti-rust coating film formed is more than 10 $\mu$m.

(2) Pot Life

300 g of the coating composition of each of Examples and Comparative Examples was put in a polyethylene vessel, and stirred with High Speed Disperser for 5 minutes. Each coating composition was left standing as such for 2 days in a thermostatic chamber at a temperature of 23°C and a relative humidity of 50% in a state of being exposed to the outside air, the skinning state of the coating composition was examined after 2 days, and the degree thereof was graded on the following two levels. Table 6 below shows the results of evaluating the pot life of each coating composition.

A: Skinning is not observed.
C: Skinning is observed.

(3) Anticorrosive Properties

Each coating composition was applied under the above-described coating application conditions to a blast treatment surface of a sand blast treatment plate (JIS G3101, SS400, size: 150 mm × 70 mm × 2.3 mm) in such a manner that a dry film thickness equal to that in the thin film coating application property test was obtained. Subsequently, the applied composition was dried in a thermostatic chamber at a temperature of 23°C and a relative humidity of 50% for 1 week as specified in JIS K5600-1-6, thereby preparing a test plate including each anti-rust coating film obtained and the treatment plate.

The prepared test plate was subjected to a salt spray test with a 5% salt solution for 350 hours as specified in JIS K5600-7-1, the ratio (%) of the rusting area to the total area of the test plate was determined, and the rusting state was evaluated. Evaluation criteria are as follows.

The composition was graded on ten levels in the following criteria on the basis of the evaluation criteria (ASTM D610) of the rusting state; further, as an evaluation of anticorrosive properties, a composition categorized to 10, 9 or 8 in the following criteria were rated "A", 7 for "B", then 6 and lower were rated "C".

Table 6 below shows the results of evaluating the anticorrosive properties of each coating composition.

10. Rusting does not occur, or the rusting area is 0.01% or less of the total area of the test plate.
9: The rusting area is more than 0.01% and 0.03% or less of the total area of the test plate.
8: The rusting area is more than 0.03% and 0.1% or less of the total area of the test plate.
7: The rusting area is more than 0.1% and 0.3% or less of the total area of the test plate.
6: The rusting area is more than 0.3% and 1% or less of the total area of the test plate.
5: The rusting area is more than 1% and 3% or less of the total area of the test plate.
4: The rusting area is more than 3% and 10% or less of the total area of the test plate.
3: The rusting area is more than 10% and 16% or less of the total area of the test plate.
2: The rusting area is more than 16% and 33% or less of the total area of the test plate.
1: The rusting area is more than 33% and 50% or less of the total area of the test plate.
0: The rusting area is more than 50% and 100% or less of the total area of the test plate.

(4) Weldability

Each coating composition was applied under the above-described coating application conditions to blast treatment surfaces of two sand blast treatment plates (JIS G3101, SS400, lower plate size: 600 mm × 100 mm × 12 mm, upper plate size: 600 mm × 50 mm × 12 mm) in such a manner that a dry film thickness equal to that in the thin film coating application property test was obtained. Subsequently, the applied composition was dried in a thermostatic chamber at a temperature of 23°C and a relative humidity of 50% for 1 week as specified in JIS K5600-1-6, thereby preparing an upper plate 20 and a lower plate 10 each having a rectangular shape in plan view as shown in Figures 1(a-1), 1(b-1) and 1(c-1). The upper plate 20 was bonded to the lower plate 10 in such a manner that the upper plate 20 was perpendicular to the lower plate 10 as shown in Figures 1(a-2), 1(b-2) and 1(c-2). Dense shaded areas of the sand blast treatment plates (upper plate 20 and lower plate 10) in Figures 1(a-1), 1(b-1) and (a-2) and (b-2) represent applied portions.

Subsequently, by a carbon dioxide automatic arc welding method, the upper plate 20 was welded to the lower plate 10 so as to perform welding on the first welding line side and on the second welding line side at the same time while a predetermined torch angle and torch shift are maintained as shown in Figures 2(a-2), 2(b-2) and 2(c-2). Table 5 below shows the welding conditions here.

[Table 5]

| Welding position | Horizontal fillet welding |
|---|---|
| Welding method | Carbon dioxide automatic arc welding, twin single method |
| Welding direction | Progressive method |
| Weld material | SM-1F, $\varphi$1.2 manufactured by Nippon Steel & Sumikin Welding Co., Ltd. |
| Current, Voltage | 300A, 38V |

EP 3 705 544 B1

(continued)

| Welding speed | 40 cm/min |
|---|---|
| Torch angle | 45 degrees, forward tilt: 5 degrees |
| Torch shift | 0 mm |
| Weld material protrusion length | 25 mm |
| Root gap | 0 |

Subsequently, weldability was evaluated in the following manner.

First, a pit number (count) and a gas groove length (mm) over a region of 500 mm in length including a temporary attachment portion before welding and excluding the ranges of 50mm from the welding start point and end point were determined. Further, on the basis of the welding conditions shown in Table 5, a laser notch (V-shaped cut) was made in a welding line on the first welding line side, a welded portion on the second welding line side was broken along the welding line with a press, and the total area of blow holes generated on the broken surface (width $\times$ length x number of blow holes) was divided by the evaluated area to calculate a blow hole generation rate (%). Existence or non-existence of blow holes of 2 mm or more in width was examined, and weldability was graded on the following three levels. Table 6 below shows the results of evaluating the weldability of each coating composition.

A: The blow hole generation rate is 10% or less, and a blow hole of 2 mm or more in width is not present.
B: The blow hole generation rate is 10% or less, and one or two blow holes of 2 mm or more in width are present.
C: The blow hole generation rate is more than 10%, or the blow hole generation rate is 10% or less and three or more blow holes of 2 mm or more in width are present.

[Table 6]

| | | Examples | | | | | | | | | | | | | | | | | Comparative Examples | | | | | | | | |
|---|---|---|---|---|---|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 | 1 | 2 | 3 | 4 | 5 | 6 | 7 | 8 | 9 |
| Average dry film thickness | | 8.8 | 7.5 | 8.3 | 8.9 | 8.4 | 8.2 | 8.8 | 8.5 | 8.0 | 9.2 | 8.9 | 8.9 | 8.6 | 8.5 | 8.7 | 8.9 | 8.2 | 8.9 | 8.6 | 8.7 | 6.8 | 7.6 | 10.4 | 11.0 | 7.9 | 8.1 |
| Evaluation results | Thin film coating application property | A | A | A | A | A | A | A | A | A | B | A | A | A | A | A | A | A | A | A | A | A | A | C | C | A | A |
| | Pot life | A | A | A | A | A | A | A | A | A | A | A | A | A | A | A | A | A | A | A | C | A | A | A | A | A | A |
| | Anticorrosive properties | A | A | A | A | A | A | A | A | B | A | A | A | A | A | A | A | A | C | C | A | B | B | B | C | A | C |
| | Weldability | A | A | A | A | A | A | B | A | A | A | A | B | A | A | A | A | A | C | A | A | C | C | A | A | C | C |

Reference Signs List

10    Sand blast treatment plate (lower plate)
20    Sand blast treatment plate (upper plate)

**Claims**

1.  An anti-rust coating composition comprising an alkyl silicate condensate (A) having a weight average molecular weight of 1,500 to 8,000, zinc powder (B), and one or more pigments (C) selected from the group consisting of an extender pigment, an anti-rust pigment and a color pigment, the pigment (C) being neither the zinc powder (B) nor a conductive pigment (D), wherein

    the conductive pigment (D) is selected from the group consisting of zinc oxide, carbon powder and metal powder other than the zinc powder (B) and molybdenum,
    a mass ratio of the zinc powder (B) to the pigment (C) ((B)/(C)) is 2.0 to 5.0, and
    the pigment volume concentration (PVC) is 60 to 70%,
    wherein the weight average molecular weight and the pigment volume concentration are determined as described in the description.

2.  The anti-rust coating composition according to claim 1, wherein the zinc powder (B) is one or more selected from the group consisting of scaly zinc powder (B1) and spherical zinc powder (B2).

3.  The anti-rust coating composition according to claim 1 or 2, further comprising a conductive pigment (D) selected from the group consisting of zinc oxide, carbon powder and metal powder other than the zinc powder (B) and molybdenum.

4. The anti-rust coating composition according to claim 3, wherein the conductive pigment (D) is zinc oxide.

5. An anti-rust coating film formed from the anti-rust coating composition according to any one of claims 1 to 4.

6. A primary anti-rust coating film comprising the anti-rust coating film according to claim 5 and having an average dry film thickness of 10 $\mu$m or less.

7. A substrate with an anti-rust coating film comprising the anti-rust coating film according to claim 5 or the primary anti-rust coating film according to claim 6, and a substrate.

8. A method for producing a substrate with an anti-rust coating film, comprising the steps of:

[1] applying to a substrate the anti-rust coating composition according to any one of claims 1 to 4; and
[2] forming a coating film on the substrate by drying the coating composition applied to the substrate.


**Patentansprüche**

1. Rostschutzbeschichtungszusammensetzung, umfassend ein Alkylsilikatkondensat (A) mit einem gewichtsmittleren Molekulargewicht von 1.500 bis 8.000, Zinkpulver (B) und ein oder mehrere Pigmente (C), ausgewählt aus der Gruppe, bestehend aus einem Extenderpigment, einem Rostschutzpigment und einem Farbpigment, wobei das Pigment (C) weder das Zinkpulver (B) noch ein leitfähiges Pigment (D) ist, wobei

das leitfähige Pigment (D) aus der Gruppe, bestehend aus Zinkoxid, Kohlenstoffpulver und einem anderen Metallpulver als das Zinkpulver (B) und Molybdän, ausgewählt ist,
ein Massenverhältnis des Zinkpulvers (B) zum Pigment (C) ((B)/(C)) 2,0 bis 5,0 beträgt und
die Pigmentvolumenkonzentration (PVC) 60 bis 70 % beträgt,
wobei das gewichtsmittlere Molekulargewicht und die Pigmentvolumenkonzentration wie in der Beschreibung beschrieben bestimmt werden.

2. Rostschutzbeschichtungszusammensetzung gemäß Anspruch 1, wobei das Zinkpulver (B) eines oder mehrere, ausgewählt aus der Gruppe, bestehend aus schuppenförmigem Zinkpulver (B1) und kugelförmigem Zinkpulver (B2), ist.

3. Rostschutzbeschichtungszusammensetzung gemäß Anspruch 1 oder 2, ferner umfassend ein leitfähiges Pigment (D), ausgewählt aus der Gruppe, bestehend aus Zinkoxid, Kohlenstoffpulver und einem anderen Metallpulver als das Zinkpulver (B) und Molybdän.

4. Rostschutzbeschichtungszusammensetzung gemäß Anspruch 3, wobei das leitfähige Pigment (D) Zinkoxid ist.

5. Rostschutzbeschichtungsfilm, der aus der Rostschutzbeschichtungszusammensetzung gemäß einem der Ansprüche 1 bis 4 gebildet ist.

6. Primärer Rostschutzbeschichtungsfilm, der den Rostschutzbeschichtungsfilm gemäß Anspruch 5 umfasst und eine durchschnittliche Trockenfilmdicke von 10 $\mu$m oder weniger aufweist.

7. Substrat mit einem Rostschutzbeschichtungsfilm, umfassend den Rostschutzbeschichtungsfilm gemäß Anspruch 5 oder den primären Rostschutzbeschichtungsfilm gemäß Anspruch 6 und ein Substrat.

8. Verfahren zur Herstellung eines Substrat mit einem Rostschutzbeschichtungsfilm, umfassend die Schritte:

[1] Auftragen der Rostschutzbeschichtungszusammensetzung gemäß einem der Ansprüche 1 bis 4 auf ein Substrat und
[2] Bilden eines Beschichtungsfilms auf dem Substrat durch Trocknen der auf dem Substrat aufgetragenen Beschichtungszusammensetzung.

**Revendications**

1. Composition de revêtement antirouille comprenant un condensat de silicate d'alkyle (A) ayant un poids moléculaire moyen en poids de 1500 à 8000, de la poudre de zinc (B) et un ou plusieurs pigments (C) choisis parmi le groupe constitué par un pigment diluant, un pigment antirouille et un pigment colorant, le pigment (C) n'étant ni la poudre de zinc (B) ni un pigment conducteur (D), dans laquelle

   le pigment conducteur (D) est choisi dans le groupe constitué par l'oxyde de zinc, la poudre de carbone et une poudre métallique autre que la poudre de zinc (B) et le molybdène,
   le rapport massique de la poudre de zinc (B) au pigment (C) ((B)/(C)) est de 2,0 à 5,0, et
   la concentration en volume de pigment (PVC) est de 60 à 70 %,
   dans laquelle le poids moléculaire moyen et la concentration en volume de pigment sont déterminés comme décrit dans la description.

2. La composition de revêtement antirouille selon la revendication 1, dans laquelle la poudre de zinc (B) est choisie parmi un ou plusieurs éléments du groupe constitué par la poudre de zinc en écailles (B1) et la poudre de zinc sphérique (B2).

3. La composition de revêtement antirouille selon la revendication 1 ou 2, comprenant en outre un pigment conducteur (D) choisi dans le groupe constitué par l'oxyde de zinc, la poudre de carbone et une poudre métallique autre que la poudre de zinc (B) et le molybdène.

4. La composition de revêtement antirouille selon la revendication 3, dans laquelle le pigment conducteur (D) est l'oxyde de zinc.

5. Film de revêtement antirouille formé à partir de la composition de revêtement antirouille selon l'une quelconque des revendications 1 à 4.

6. Film de revêtement antirouille primaire comprenant le film de revêtement antirouille selon la revendication 5 et ayant une épaisseur moyenne de film sec de 10 $\mu$m ou moins.

7. Substrat avec un film de revêtement antirouille comprenant le film de revêtement antirouille selon la revendication 5 ou le film de revêtement antirouille primaire selon la revendication 6, et un substrat.

8. Procédé de production d'un substrat avec un film de revêtement antirouille, comprenant les étapes consistant de :

   [1] application sur un substrat de la composition de revêtement antirouille selon l'une quelconque des revendications 1 à 4 ; et
   [2] formation d'un film de revêtement sur le substrat en séchant la composition de revêtement appliquée sur le substrat.

[Figure 1]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014014063 A
- WO 2014119784 A